# EUROPEAN PATENT APPLICATION

(11) **EP 1 157 605 A2**
(43) Date of publication of application: **28.11.2001**
(21) Application number: 01850097.5
(22) Date of filing: 23.05.2001
(51) Int. Cl.: A01G 23/00

(54) **Thinning and clearing device**

(30) Priority: 25.05.2000 SE 0001953
(71) Applicant: VIMEK AB, S-92 221 Vindeln (SE)
(72) Inventor: Nilsson, Lars-Gunnar, 922 22 Vindeln (SE)
(74) Representative: Onn, Thorsten

(57) **Abstract**

The invention concerns a device for thinning and clearing and of the type that is so arranged as to be suspended with its stand (1) in a manoeuvrable manner from the end of a crane arm (6), comprising a cutting device in the form of a first (2) and a second (3) part placed on top of each other, one above the other, and linked together to perform a movement relative to each other by means of a drive unit (4) arranged with the parts, whereby extending from side pieces (9 and 10) that are common to both the first and the second part are arranged cutting edges (11 and 12) which, through the movement of the said parts (2 and 3), in an alternately overlapping fashion, form gaps (13) into which the material being cut can be received and cut through a generated cutting or clipping action. In order for the cutting to take place without risk of flying objects and without noise, the first (2) and the second (3) part performing a relative reciprocal movement.

## Description

The present invention concerns a unit for thinning and clearing as described in the preamble to Claim 1.

Mechanical clearing and thinning of thicket and young forest and the like is usually carried out using a type of unit equipped with rotating blades that is intended for being carried on a crane fixed to a vehicle for easy manoeuvrability in the area where the vegetation is to be cut. In order for the blades to attain the required cutting effect, they must rotate at a very high speed. This also means that loose objects can be thrown with great force and speed from the unit. The machine operator is usually positioned inside the vehicle cab and thereby well-protected from any flying objects, while other people in the vicinity of the clearing unit risk being hit by these flying objects. Further problems with the said unit are high noise levels and difficulties in rapidly bringing the rotating blades on known units to a standstill for precise manoeuvring and positioning.

The objective of the present invention is therefore to achieve a thinning and clearing unit without the above disadvantages but is so constructed that cutting can be carried out without the risk of flying objects and the aforesaid noise levels.

This is achieved by the unit in accordance with the present invention exhibiting the characteristics specified in the following claims.

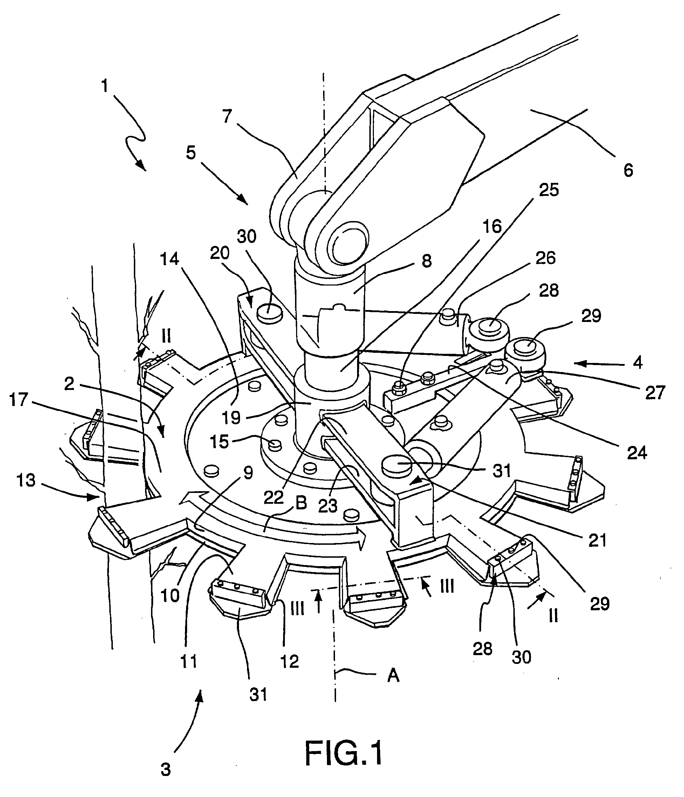

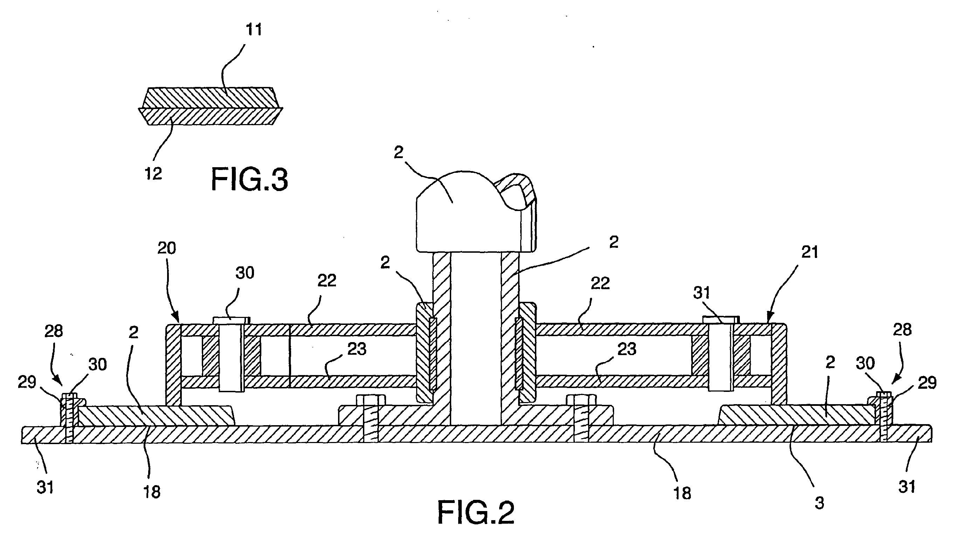

The following is a description of this invention with references to attached drawings, where **fig. 1** is a perspective view of the unit in accordance with the invention, **fig. 2** is a cross-section along the line II-II in fig. 1 and **fig. 3** is a cross-section along the line III-III in fig. 1.

The present unit of the design illustrated in the drawings includes a frame or stand 1 that exhibits a first and a second interfacing disc-shaped part, 2 and 3, which are jointly combined to one unit for executing a reciprocal swivelling movement relative to each other brought about by a drive unit acting between the parts, generally designated 4.

The unit is via a suspension device 5 articulately suspended from the end of a crane arm 6, which can be attached to a vehicle such as a forestry machine, tractor or the like. The suspension device includes devices 7 for manoeuvring the unit into various positions and at least between the horizontal position shown in fig. 1 to a vertical position. Principally, the suspension device also includes a device 8 in the form of a rotator, for example, that allows the unit to swivel or rotate around its own main axis relative to the crane arm 6 from which the unit is suspended.

In one piece with the first 2 and the second 3 part designated with reference numbers 9 and 10 respectively are cutting edges 11 and 12, which, for attaining a cutting or clipping movement, move over each other alternately during the relative swivelling movement of parts 2 and 3. When the first and the second part, 2 and 3, are moved to such a position that the cutting edges 11 and 12 are overlapping or one above the other as shown in fig. 1, the gaps 13, into which the material being cut can be guided, will be bounded by the cutting edges. The size, strength and general design of the said openings 13 and cutting edges 11 and 12 are suitably chosen with regard to the dimensions and properties of the material, such as trees and bushes and the like, which the unit is intended to cut.

In the design example illustrated in the drawings, the second and in the figure bottom part 3 includes a principally flat, circular, disc-shaped element 14 cut from metal plate, from the centre or main axis of which, via a bolted joint 15 and at right-angles to the main face of the element 14, is fastened the flange-like end of a shaft 16 that runs coaxially with the aforesaid main axis. The first and in the figure top part 2 is similarly manufactured in metal plate but has in contrast to the second part 3 been given the form of a ring 17 with a defined inside and outside diameter. The aforesaid outside diameter is chosen so that the circumferential outside edge 9 or periphery coincides or is aligned with the outside edge 10 of the second part 14 and the inside diameter is chosen so that a sufficiently large sliding or bearing surface 18 is obtained between the interfacing sides of the parts 2 and 3.

As illustrated in fig. 1, the cutting edges 11 and 12 are evenly distributed around the side edges 9 and 10 of the first 2 and the second 3 part and radiate from these side edges.

In order to rotate around the shaft 16, the first part 2 is linked to a swivel-bearing sleeve 19 on the shaft via two diametrically opposite arms 20 and 21, which run between the sleeve 19 and the top of the first disc-shaped part in the vicinity of its side edge 9. Each of the arms 20 and 21 are arranged as two joined side pieces 22 and 23 positioned at a distance from each other. As the first part 2 has the form of a ring 17, the side of the second part 3 that is shown face up in fig. 1 is exposed and thereby free to be used as an assembly surface. To the said surface of this part is joined one end of a cantilevered arm 24 by means of a bolted joint 25. Running from its point of attachment and parallel to and at a distance from the first part 2, the arm radiates in relation to the main axis A to the vicinity of the outer periphery of the first 2 and the second 3 part.

As illustrated in fig. 1, the arm acts as a counterstay for the drive unit 4, which is arranged to act between the free end of the said arm 24 and each of the aforesaid arms 20 and 21 so that the first 2 part can move back and forth under the implementation of a limited swivelling movement in opposite directions around the shaft of the second part 3, as illustrated by the double arrow B.

The drive unit 4 includes a first and a second twin-action, hydraulic or pneumatic piston-cylinder device 26 and 27, which each exhibit a first end that via a pin 28 and 29 is articulately attached to the free end of the arm 20 and a second end that via a pin 30 and 31 is articulately attached to the respective arm 20 and 21 between each of its side pieces 22 and 23. The hydraulic or pneumatic control circuit arranged to the piston-cylinder devices 26 and 27 will not be described in more detail as such are well known, can be designed in a number of different ways and is not itself part of the invention. It can here be pointed out that the control circuit can suitably be designed so that the unit's drive unit 4 is only active when a cutting operation is to be performed, whereby the unit's drive unit in addition to this is inactive for manoeuvring and positioning, for example. It should be understood that the unit will hereby exhibit a very low energy consumption while it can also be positioned without the risk of moving parts colliding with objects located outside the working range of the unit.

For the transfer of motion to the first part 2, both the piston-cylinder devices 26 and 27 interact in such a way that movement in one direction is performed by one piston-cylinder device 26 carrying out a positive movement while the other piston-cylinder device 27 carries out a negative movement, with the opposite taking place in the other direction, where one piston-cylinder device 26 carries out a negative movement while the other piston-cylinder device 27 carries out a positive movement. The stroke of both piston-cylinder devices 26 and 27 and their respective points of application are chosen so that the cutting edges 11 of the first part 2 move across the distance between two cutting edges 12 of the second part 3 located on the outer circumference of the said parts 2 and 3 respectively. In other words, similar to that illustrated by the double arrow B in fig. 1.

As is evident after a closer study of the drawings, guiding devices 28 are arranged between the cutting edges 11 and 12 for guiding the said cutting edges as they pass over each other. Each such guide device 28 includes a guide bar 29 fastened with a bolted union 30 to a, relative the main axis A, slight radial outward extension 31 on the cutting edges 12 of the second part 3. Referring to fig. 2, each guide bar 29 exhibits a grooved section 32, which, in order to form a sliding guide, is designed to interact with the outer peripheral edge of each cutting edge 11 on the first part 2. The use of the said guiding device 28 not only increases the efficiency of the clipping or cutting action obtained between the cutting edges 11 and 12 but also to a great extent eliminates the risk of the cutting edges being forced apart if branches or other objects for some reason should fasten between the interacting cutting edges 11 and 12.

The aforesaid radially extended sections 31 on their part form a kind of section that protects the sensitive cutting edges 11 and 12 from the hard knocks and blows that may be caused by hard objects such as stones or the like that are present in the working range of the machine. These radially extended sections 31 or protective sections have a further function, namely to efficiently guide the material being cut into the gap between the cutting edges 11 and 12. In this section, each such radially extended section 31 exhibits a form that is radially tapered towards the outer end and is terminated with an impact-proof, principally flat or blunt end piece.

The present invention is not limited to the above description but can be changed and modified in a number of different ways within the framework of the idea of invention specified in the following claims.

## Claims

1. Device for thinning and clearing and of the type that is so arranged as to be suspended with its stand (1) in a manoeuvrable manner from the end of a crane arm (6), comprising a cutting device in the form of a first (2) and a second (3) part placed on top of each other, one above the other, and linked together to perform a movement relative to each other by means of a drive unit (4) arranged with the parts, whereby extending from side pieces (9 and 10) that are common to both the first and the second part are arranged cutting edges (11 and 12) which, through the movement of the said parts (2 and 3), in an alternately overlapping fashion, form gaps (13) into which the material being cut can be received and cut through a generated cutting or clipping action, **characterised by** the first (2) and the second (3) part performing a relative reciprocal movement.

2. Device according to claim 1, wherein the second part (3) being intended for attachment to the crane arm (6) via a shaft (16), around which the first part (2) is arranged to rotate whereby the drive unit (4) acts between the first (2) and the second part (3) and that the relative movement of the said parts is achieved by turning the first part (2) around the said shaft.

3. Device according to claim 2, wherein the drive unit comprising a first and a second twin-action, medium-activated piston-cylinder device (26 and 27) located on diametrically opposite sides of the shaft (16) and that the said piston-cylinder devices interact in such a way that one piston-cylinder device performs a positive movement while the second piston-cylinder device performs a negative movement.

4. Device according to the previous claims 2-3, wherein the first (2) and the second part (3) comprising principally circular, flat, disc-shaped elements (17 and 14), on the peripheral edges of which are arranged cutting edges (11 and 12) that radiate relative to the shaft (16).

5. Device according to the previous claims 1 ― 4, wherein the inclusion of devices (28) for guiding the respective cutting edges (11 and 12) as they pass over each other.

6. Device according to claim 5, wherein each guiding device (28) comprising a guide bar (29) arranged on one cutting edge (12), with which the other cutting edge (11) interacts.
